## Europäisches Patentamt
## European Patent Office
## Office européen des brevets

(19)

(11) Veröffentlichungsnummer: **0 210 408**
**A1**

(12) # EUROPÄISCHE PATENTANMELDUNG

(21) Anmeldenummer: 86108307.9

(22) Anmeldetag: 18.06.86

(51) Int. Cl.⁴: **G 01 F 1/84**

(30) Priorität: 23.07.85 DE 3526297

(43) Veröffentlichungstag der Anmeldung:
04.02.87 Patentblatt 87/6

(84) Benannte Vertragsstaaten:
**DE FR GB NL**

(71) Anmelder: **Fischer & Porter GmbH**
**Postfach 701 Dransfelder Strasse 2**
**D-3400 Göttingen(DE)**

(72) Erfinder: **Appel, Eggert**
**Imbser Weg 1**
**D-3402 Dransfeld(DE)**

(72) Erfinder: **Nissen, Peter**
**Flachsrotte 9**
**D-3405 Rosdorf(DE)**

(72) Erfinder: **Schwiderski, Hans-Werner**
**Rode-Weg 17**
**D-3400 Göttingen(DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Möhlstrasse 22**
**D-8000 München 80(DE)**

(54) **Vorrichtung zur Messung des Masseflusses eines strömenden Mediums.**

(57) Vorrichtung zur Messung des Masseflusses eines strömenden Mediums, in der eine auf das strömende Medium wirkende Corioliskraft zur Erzeugung eines dem Massefluß entsprechenden Meßwerts ausgenutzt wird, mit einer von dem strömenden Medium durchströmten, an ihren Enden (4,6) vorrichtungsfest eingespannten Rohrschleife (2), mit einer Erregeranordnung, die die Rohrschleife (2) in Schwingungen um eine rechtwinklig zu ihrer Achse verlaufende Achse (Erregungs-Schwingachse E) versetzt, und mit einer Abnehmeranordnung, die die Amplitude von Schwingungen der Rohrschleife (2) um eine zu der Achse (R) der Rohrschleife (2) und der Erregungs-Schwingachse (E) rechtwinklige Achse (Abnehmer-Schwingachse A) in Signale zur Ableitung des Meßwertes umsetzt, dadurch gekennzeichnet, daß sie eine einzige Rohrschleife (2) in Form einer Spule mit mehr als einer Windung aufweist und daß die Erregeranordnung wenigstens ein Paar von beidseitig der Mitte (Po) der Länge der Rohrschleife (2) in Richtung der Achse der Rohrschleife (2) aufeinanderfolgende Stellen (P₁, P₂) der Rohrschleife (2), die in gleichem Abstand von der Mitte (Po) der Länge der Rohrschleife (2) liegen, in gleichphasige Schwingungen gleicher Amplitude (F₁, F₂) versetzt.

FIG.2

EP 0 210 408 A1

Die Erfindung betrifft eine Vorrichtung zur Messung des Masseflusses eines strömenden Mediums nach dem Oberbegriff des Anspruchs 1.

Eine nach der DE-OS 28 22 o87 bekannte Vorrichtung dieser Art weist zwei parallel nebeneinanderliegende Rohrschleifen auf, die parallel gespeist werden. Die beiden Rohrschleifen werden von der Erregeranordnung stimmgabelartig in Schwingungen versetzt, um in dem abgeleiteten Meßwert Störungen zu unterdrücken, die von Vibrationen der Vorrichtung herrühren. Auch andere ähnliche Vorrichtungen weisen jeweils mindestens zwei Rohrschleifen auf, die parallel gespeist werden, um bei der Ableitung des Meßwerts Störungen durch Vibrationen zu unterdrücken, beispielsweise die Vorrichtungen nach der europäischen Patentanmeldung 83o6511, der US-PS 4,491,o25, der europäischen Patentanmeldung 84oo115 und der US-PS 4,422,338.

Vorrichtungen, die mit nur einer einzigen Rohrschleife arbeiten, liefern vibrationsempfindliche Meßwerte, so die Vorrichtung aus der Zeitschrift"Chemie-Technik", Sonderdruck des Aufsatzes "Massedurchflußmessung nach dem gyroskopischen Prinzip" (1981); Prospekt "Massflo" der Firma Danfoss vom März 1985 und auch die sehr umständlich aufgebaute Vorrichtung nach der US-PS 4,444,o59.

In den erstgenannten Vorrichtungen mit mehreren Rohrschleifen können im Laufe des Betriebs auftretende Rohrinnenwandbeläge, die von Rohrschleife zu Rohrschleife unterschiedlich sind, zu erheblichen Meßwertfehlern führen. Außerdem können bei denjenigen Vorrichtungen, in denen das strömende Medium vor dem Eintritt in die Rohrschleifen und nach dem Austritt aus den Rohrschleifen stark umgelenkt wird, erhebliche Druckverluste im strömenden Medium auftreten, beispielsweise in der Vorrichtung nach der europäischen Patentanmeldung 83o6511. Überdies ist die Reinigung von Vorrichtungen mit mehreren Rohrschleifen sehr schwierig, z.B. nicht durch Molchen möglich. Da die mehreren Rohrschleifen meist eingangsseitig an ein gemeinsamens Zuführungsrohr und ausgangsseitig an ein gemeinsames Abführungsrohr angeschweißt sind, treten durch die im Betrieb systembedingten Biegebeanspruchungen auch unter Umständen Ermüdungsbrüche auf, beispielsweise bei der Vorrichtung nach der europäischen Patentanmeldung 83306511. Schließlich sind Vorrichtungen mit mehreren Rohrschleifen entsprechend ihrem konstruktiv bedingten hohen Aufwand sehr teuer.

Aufgabe der Erfindung ist es demgegenüber, eine Vorrichtung nach dem Oberbegriff des Anspruchs 1 anzugeben, die einerseits keine vibrationsempfindlichen Meßwerte liefert, andererseits aber die angegebenen Nachteile von Mehrrohrsystemen nicht aufweist, also leicht zu reinigen ist, nicht zu erheblichen Druckverlusten führt und in ihrem konstruktiven Aufwand einfach ist.

Die Lösung dieser Aufgabe ist im Kennzeichen des Anspruchs 1 angegeben.

Da Vibrationsstörungen im wesentlichen gleichphasig auf die Aufnehmer wirken, die dem Massedurchfluß entsprechenden Messwerte der Aufnehmer jedoch gegenphasig sind,
lassen sich die Störungen bei der Meßwertverarbeitung ohne Schwierigkeit eliminieren.

Vorteilhafte Ausgestaltungen der Erfindung sind in den Unteransprüchen angegeben.

Die Erfindung wird im folgenden an Ausführungsbeispielen unter Hinweis auf die beigefügten Zeichnungen beschrieben:

Fig. 1 zeigt perspektivisch eine Rohrschleife der Vorrichtung mit etwa 1 1/2 Windungen; Erreger und Abnehmer sind nicht dargestellt, weil sie an sich nach den genannten Schriften bekannt sind und nicht ihre Ausbildung, sondern ihre Orte für die Erfindung wesentlich sind.

Fig. 2 zeigt schematisch eine erste Möglichkeit der Anordnung von Erregern und Abnehmern.

Fig. 3 zeigt schematisch eine zweite Möglichkeit der Anordnung von Erregern und Abnehmern.

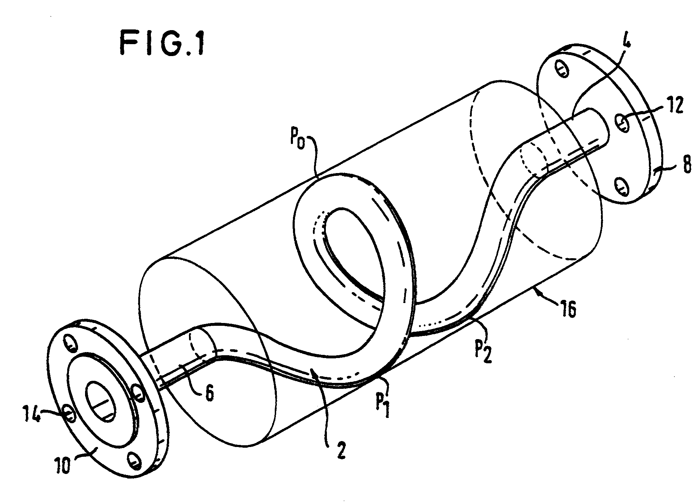

Fig. 1 zeigt eine Rohrschleife 2 in Form einer Spule mit etwa 1 1/2 Windungen, die ein axial gerichtetes Zuführungsende 4 und ein axial gerichtetes Abführungsende 6 aufweist. Grundsätzlich können aber die Zuführungs- und Abführungsenden 4, 6 auch in anderer Weise, etwa radial oder tangential zur Rohrschleife, verlaufen. Ist die Anzahl der Windungen der Rohrschleife ganzzahlig, können die Zuführungs- und Abführungsenden 4, 6 tangential voneinander fort gerichtet sein. Die Enden 4, 6 gehen in Befestigungsflansche 8, 1o mit Befestigungslöchern 12, 14 über.

Die Rohrschleife 2 befindet sich zwischen ihren Enden 4, 6 in einem schützenden, Erreger und Abnehmer tragenden Gehäuse 16. An der Rohrschleife sind Punkte $P_o$, $P_1$, $P_2$ markiert, die für die nachfolgende Beschreibung von Bedeutung sind und dort wieder verwendet werden.

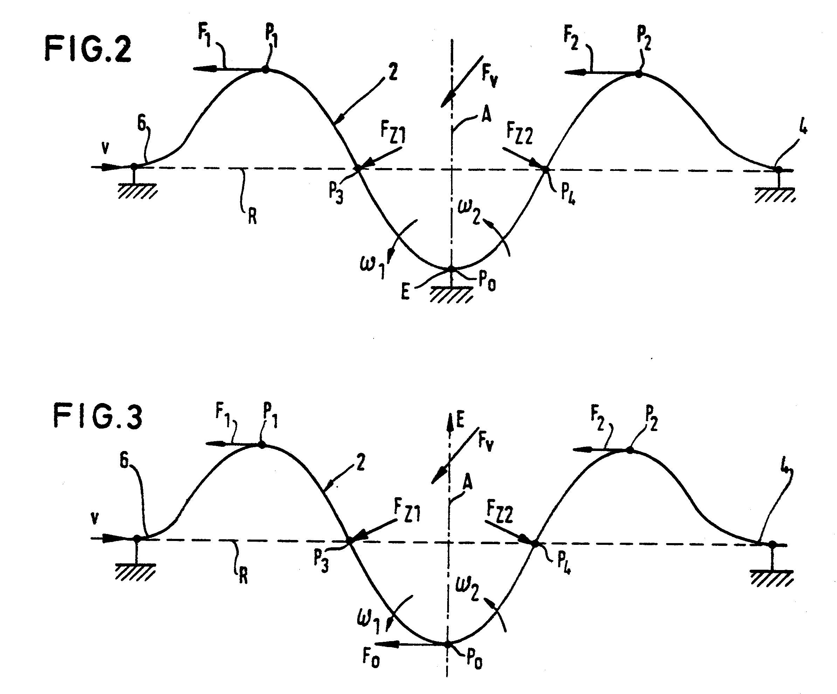

Fig. 2 zeigt eine Rohrschleife 2, deren Enden 4, 6 vorrichtungsfest eingespannt sind. Der Rohrschleife 2 wird ein strömendes Medium in Pfeilrichtung v zugeführt. In der Mitte ihrer Länge ist die Rohrschleife 2 am Punkt $P_o$ ebenfalls vorrichtungsfest eingespannt. Auf die Punkte $P_1$, $P_2$ wirken gleichphasig und mit gleicher Wirkungsamplitude Erreger, die die Punkte $P_1$ und $P_2$

-4-

/gleichphasig

mit gleicher Amplitude in Richtung der Pfeile $F_1$ und $F_2$ (und in entgegengesetzter Richtung) in Schwingungen versetzen. An den Punkten $P_3$ und $P_4$ befinden sich Abnehmer. Die dort auftretenden Corioliskräfte sind für den Fall, daß die Kräfte $F_1$ und $F_2$ gerade in den angegebenen Richtungen wirken, mit $F_{Z1}$ und $F_{Z2}$ bezeichnet.

Die Kräfte $F_1$ und $F_2$ führen in dem dargestellten Zustand zu Verbiegungen der Rohrschleife beidseitig des Punkts $P_O$ in Richtung $\omega_1$ und $\omega_2$. Darauf beruht die Richtung der Corioliskräfte $F_{Z1}$ und $F_{Z2}$. Ersichtlich verlaufen diese Cosioliskräfte fast entgegengesetzt, also (schematisch) gegenphasig, während eine Vibration mit einer Kraftkomponente $F_V$ quer zur Achse der Rohrschleife auf die Punkte $P_3$ und $P_4$ gleichphasig wirkt. Das hat zur Folge, daß in einem Meßwert, der aus den Meßwerten der Abnehmer an den Punkten $P_3$ und $P_4$ kombiniert wird, Vibrationskomponenten eliminiert werden können. Dies gilt unabhängig von der Richtung der Vibrationskräfte.

Die gestrichelte Linie R kennzeichnet die Achse der Rohrschleife. Die Erreger-Schwingachse E verläuft im Fall der Fig. 2 durch den Punkt $P_O$ rechtwinklig zur Papierebene. Die Abnehmer-Schwingachse A ist durch die strichpunktierte Linie gekennzeichnet, die durch den Punkt $P_O$ verläuft.

Bei der Ausführungsform nach Fig. 3 ist die Rohrschleife 2 nur an ihren Enden 4, 6 vorrichtungsfest eingespannt. Es ist nur ein einziger Erreger am Punkt $P_O$ vorgesehen, der auf den Punkt $P_O$ eine Erregung in Richtung $F_O$ ausübt, die die Rohrschleife an den Stellen $P_1$ und $P_2$ in Richtung $F_1$ und $F_2$ gleichphasig mit gleicher Schwingungsamplitude erregt. Die Wirkungsweise ist im übrigen die gleiche wie im Zusammenhang mit Fig. 2 beschrieben, bei der Ausführung nach Fig. 3 ist jedoch der konstruktive Aufwand geringer und die Empfind-

-5-

lichkeit höher.

Die Achse der Rohrschleife 2 ist wieder durch R gekennzeichnet und die Abnehmer-Schwingachse durch A. Die Erreger-Schwingachse E verläuft in diesem Fall durch einen in Fig. 3 aus Platzmangel nicht gezeigten Punkt rechtwinklig zur Papierebene, der auf der Achse A in Richtung des Pfeiles E liegt.

Allen Ausführungsformen sind folgende Vorteile gemein:

Auf die Abschnitte der Rohrschleife gleichsinnig wirkende Kräfte, etwa aufgrund von Vibrationen, können durch Differenzbildung der von den Abnehmern gelieferten Meßwerte eliminiert werden, und zwar unabhängig davon, in welcher Richtung die Kräfte gleichsinnig wirken.

Die Rohrschleife kann leicht, etwa durch Molchen, gereinigt werden.

Der Druckverlust des strömenden Mediums in der Rohrschleife ist gering.

Bei der systembedingten, mechanischen Beanspruchung der Rohrschleife treten nur Torsionskräfte auf; Ermüdungsbrüche sind daher unwahrscheinlich.

Die Einbaulänge der Rohrschleife ist verhältnismäßig klein.

Patentansprüche

1. Vorrichtung zur Messung des Masseflusses eines strömenden Mediums, in der eine auf das strömende Medium wirkende Corioliskraft zur Erzeugung eines dem Massefluß entsprechenden Meßwerts ausgenutzt wird, mit einer von dem strömenden Medium durchströmten, an ihren Enden (4, 6) vorrichtungsfest eingespannten Rohrschleife (2), mit einer Erregeranordnung, die die Rohrschleife (2) in Schwingungen um eine rechtwinklig zu ihrer Achse verlaufende Achse (Erregungs-Schwingachse E) versetzt, und mit einer Abnehmeranordnung, die die Amplitude von Schwingungen der Rohrschleife (2) um eine zu der Achse (R) der Rohrschleife (2) und der Erregungs-Schwingachse (E) rechtwinklige Achse (Abnehmer-Schwingachse A) in Signale zur Ableitung des Meßwertes umsetzt, dadurch gekennzeichnet, daß sie eine einzige Rohrschleife (2) in Form einer Spule mit mehr als einer Windung aufweist und daß die Erregeranordnung wenigstens ein Paar von beidseitig der Mitte ($P_0$) der Länge der Rohrschleife (2) in Richtung der Achse der Rohrschleife (2) aufeinanderfolgende Stellen ($P_1$, $P_2$) der Rohrschleife (2), die in gleichem Abstand von der Mitte ($P_0$) der Länge der Rohrschleife (2) liegen, in gleichphasige Schwingungen gleicher Amplitude ($F_1$, $F_2$) versetzt.

2. Vorrichtung nach Anspruch 1, dadurch gekennzeichnet, daß auf jede der beiden Stellen ($P_1$, $P_2$) ein Erreger einwirkt und daß die Mitte ($P_0$) der Länge der Rohrschleife (2) vorrichtungsfest eingespannt ist.

3. Vorrichtung nach Anspruch 1, dadurch gekennzeichnet, daß nur auf die Mitte ($P_0$) der Länge der Rohrschleife (2) ein Erreger einwirkt.

FIG.1

0210408

FIG.2

FIG.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 86108307.9 |
| D,Y | DE - A1 - 2 822 087 (HALLIBURTON) <br> * Fig. 1 * <br><br> -- | 1,3 | G 01 F 1/84 |
| Y | FR - A - 1 139 048 (BRACHET) <br> * Seite 1, linke Spalte; Fig. 1 * | 1,3 | |
| A | | 2 | |
| | -- | | |
| P,A | WO - A1 - 85/5 677 (EXAC) <br> * Zusammenfassung; Fig. 2,4 * <br><br> ---- | 1-3 | |
| | | | RECHERCHIERTE SACHGEBIETE (Int. Cl.4) |
| | | | G 01 F 1/00 |

Der vorliegende Recherchenbericht wurde für alle Patentansprüche erstellt.

| Recherchenort | Abschlußdatum der Recherche | Prüfer |
|---|---|---|
| WIEN | 002-09-1986 | BURGHARDT |